# EUROPEAN PATENT APPLICATION

(11) **EP 1 054 524 A2**
(43) Date of publication of application: **22.11.2000**
(21) Application number: 00110608.7
(22) Date of filing: 18.05.2000
(51) Int. Cl.: H04J 14/02

(54) **Optical redundant switching method of optical wavelength multiplex system**

(30) Priority: 20.05.1999 JP 14035399
(71) Applicant: MITSUBISHI DENKI KABUSHIKI KAISHA, Tokyo 100-8310 (JP); KDD Submarine Cable Systems Inc., Tokyo 160-0023 (JP)
(72) Inventor: Kubo, Kazuo, Mitsubishi Denki Kabushiki Kaisha, Tokyo 100-8310 (JP); Kozaki, Seiji, Mitsubishi Denki Kabushiki Kaisha, Tokyo 100-8310 (JP); Uemura, Aritomo, Mitsubishi Denki Kabushiki Kaisha, Tokyo 100-8310 (JP); Ichibangase, Hiroshi, Mitsubishi Denki K. K., Tokyo 100-8310 (JP); Shibano, Eiichi, KDD Submarine Cable Systems Inc., Tokyo 160-0023 (JP); Yasuda, Tadami, KDD Submarine Cable Systems Inc., Tokyo 160-0023 (JP); Andou, Noboru, KDD Submarine Cable Systems Inc., Tokyo 160-0023 (JP)
(74) Representative: Pfenning, Meinig & Partner GbR

(57) **Abstract**

An optical redundant switching method in an optical wavelength multiplex system has the steps of carrying out validity check of standby systems in a normal operation mode of operating systems with emitting optical outputs of the standby systems continuously; and reducing a gain of an optical amplifying repeater (29a-29n) while at least one of the operating systems is faulty, and the operating channel (1a-4a) associated with the faulty operating system is connected to one of the standby optical terminal units (25a). This makes it possible to prevent an adverse effect on transmission characteristics due to changes in the number of wavelengths involved in redundant switching by a conventional optical redundant switching method in an optical wavelength multiplex transmission system.

## Description

### BACKGROUND OF THE INVENTION

### Field of the Invention

The present invention relates to an optical redundant switching method of an optical wavelength multiplex system.

### Description of Related Art

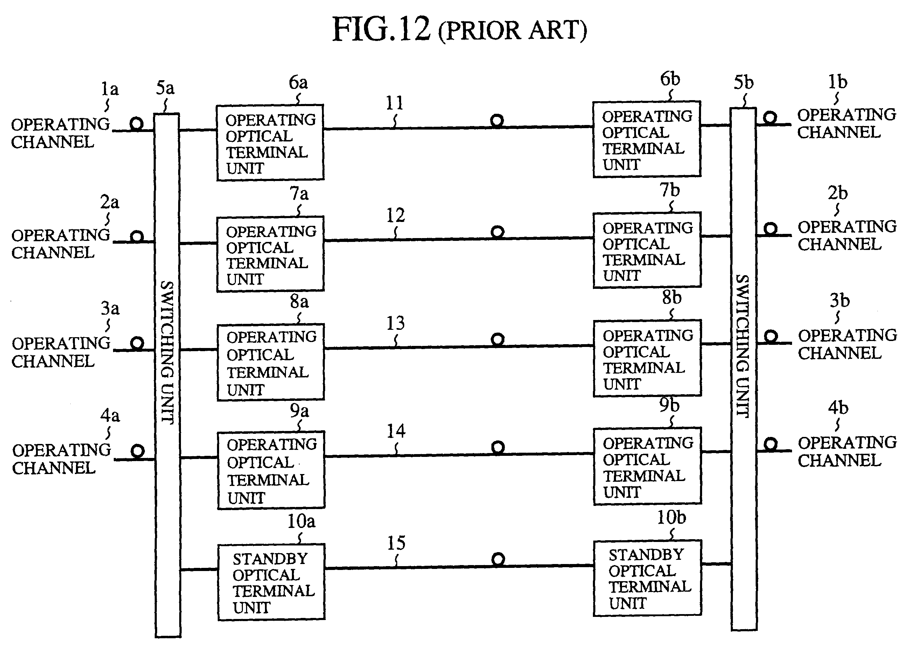

Fig. 12 is a block diagram showing a conventional optical communications system shown in ITU-T G.782 recommendations, or in TTC JT-G782 standards (published April 28, 1992) . In this figure, reference numerals 1a-4a and 1b-4b designate four operating channels, respectively; 5a and 5b designate switching units for switching the operating channels 1a-4a and 1b-4b; 6a-9a and 6b-9b designate four operating optical terminal units, respectively; 10a and 10b each designate a standby optical terminal unit; and 11-14 designate four operating optical transmission lines; and 15 designates a standby optical transmission line.

Next, the operation of the conventional system will be described.

In the optical redundant switching method of the conventional optical communications system, when the operating systems in the communications system are in the normal state, the switching unit 5a connects the four operating channels 1a-4a to the operating optical terminal units 6a-9a, respectively. The operating optical terminal units 6a-9a are connected to the corresponding operating optical terminal units 6b-9b through the operating optical transmission lines 11-14 consisting of four optical fibers. The operating optical terminal units 6b-9b extend the operating channels to the switching unit 5b which connects them to the operating channels 1b-4b.

The operating optical terminal units 6a-9a and 6b-9b, and standby optical terminal units 10a and 10b each have a frame alignment function and a transmission line monitoring function such as bit error detection, and the validity of the standby optical transmission line 15 is always checked as well.

If a fault takes place in the operating optical transmission line 11 or in the operating optical terminal unit 6a or 6b, the switching unit 5a connects the operating channel 1a to the standby optical terminal unit 10a which is connected to the corresponding standby optical terminal unit 10b through the standby optical transmission line 15. Then, the switching unit 5b connects the operating channel 1a to the operating channel 1b through the standby optical terminal unit 10b.

This enables to save the fault in the operating system. Since the plurality of the operating channels 1a-4a share the standby optical transmission line 15, the system can offer a highly reliable system at a low cost.

In the optical redundant switching method of the conventional optical wavelength multiplex system with the foregoing configuration, the operating optical transmission lines 11-14 and the standby optical transmission line 15 consist of separate optical fibers. Accordingly, the validity of the standby optical transmission line 15 can be monitored continuously, and a change in the number of the operating optical transmission lines sharing the standby optical transmission line has no effect on the optical transmission characteristics of the optical transmission lines.

On the other hand, when introducing the conventional optical redundant switching method into an optical wavelength multiplex transmission system, in which N optical wavelengths are assigned to N operating channels and one optical wavelength to a single standby channel, where N is a natural number greater than one, there arises a problem in that changes in the number of the wavelengths involved in the redundant switching have an important effect on the transmission characteristics. This is because there is a tradeoff between the number of the wavelengths and the transmission distance in the optical wavelength multiplex transmission system, such as an increasing distance requires a decrease in the number of the wavelengths, and the system is constructed under the design considering such transmission characteristics.

### SUMMARY OF THE INVENTION

The present invention is implemented to solve the foregoing problem. It is therefore an object of the present invention to provide an optical redundant switching method of an optical wavelength multiplex system that can suppress the effect of changes in the number of wavelengths involved in redundant switching on the transmission lines, or that can suppress the effect on the transmission lines by preventing the changes in the number of wavelengths involved in the redundant switching, and that can check the validity of the standby system in the normal state of the operating systems, and can check the validity of a faulty operating system when recovering from the fault.

According to a first aspect of the present invention, there is provided an optical redundant switching method in an optical wavelength multiplex system that includes N operating optical terminal units for carry out bidirectional conversion between operating channel wavelengths and prescribed different wavelengths, where N is a natural number; M standby optical terminal units for carry out bidirectional conversion between standby channel wavelengths and prescribed different wavelengths, where M is a natural number less than or equal to N; a wavelength multiplexer/demultiplexer connected to the operating optical terminal units and the standby optical terminal units, for multiplexing (N+M) optical signals with the prescribed different wavelengths to be transmitted to an optical transmission line, and for demultiplexing an optical wavelength multiplexed signal from the optical transmission line to (N+M) optical signals with the prescribed different wavelengths; a switching unit for connecting N operating channels to the N operating optical terminal units and for connecting M of the N operating terminal units to the M standby optical terminal units; and at least one optical amplifying repeater installed in at least one position on the optical transmission line at a fixed interval, for amplifying an input optical wavelength multiplexed signal, the optical redundant switching method comprising the steps of: carrying out validity check of the standby systems in a normal operation mode of the operating systems with emitting optical outputs of the standby systems continuously; and reducing a gain of the optical amplifying repeater while at least one of the operating systems is faulty, and the operating channel associated with the faulty operating system is connected to one of the standby optical terminal units.

According to a second aspect of the present invention, there is provided an optical redundant switching method in the optical wavelength multiplex system, comprising the steps of: extinguishing optical outputs of the standby systems in a normal operation mode of the operating systems; carrying out, if a fault takes place in the operating systems, validity check of the standby systems by emitting optical outputs of the standby systems; and connecting the operating channel associated with a faulty operating system to one of the standby optical terminal units.

The optical redundant switching method may further comprise the steps of: extinguishing the optical outputs of the standby systems at a recovery of the faulty operating system; and carrying out switching back to the recovered operating system.

The optical redundant switching method may further comprise the steps of: carrying out, at a recovery of the faulty operating system, switching back to the recovered operating system after confirming validity of the recovered operating system by emitting its optical output; and extinguishing the optical outputs of the standby systems.

The optical redundant switching method may further comprise the step of increasing the gain of the optical amplifying repeater when emitting the optical output of the recovered operating system.

The optical redundant switching method may further comprise the step of carry out validity check of the standby systems by intermittently emitting the optical outputs of the standby systems in the normal operation mode of the operating systems.

The optical redundant switching method may further comprise the step of increasing the gain of the optical amplifying repeater while intermittently emitting the optical outputs of the standby systems in the normal operation mode of the operating systems.

According to a third aspect of the present invention, there is provided an optical redundant switching method in the optical wavelength multiplex system, comprising the steps of: checking, in a normal operation mode of the operating systems, validity of the standby systems by feeding an optical output of a transmitter back to a receiver in each of the standby systems; and checking, in a recovery mode of the operating systems, validity of the operating systems by feeding an optical output of a transmitter back to a receiver in each of the operating systems.

### BRIEF DESCRIPTION OF THE DRAWINGS

Fig. 1 is a block diagram showing an embodiment 1 of an optical wavelength multiplex system in accordance with the present invention;
Fig. 2 is a block diagram showing the detail of a switching unit;
Fig. 3 is a flowchart illustrating an optical redundant switching method of the embodiment 1 of the optical wavelength multiplex system in accordance with the present invention;
Fig. 4 is a block diagram showing an embodiment 2 of an optical wavelength multiplex system in accordance with the present invention;
Fig. 5 is a flowchart illustrating an optical redundant switching method in an embodiment 3 of the optical wavelength multiplex system in accordance with the present invention;
Fig. 6 is a flowchart illustrating an optical redundant switching method in an embodiment 4 of the optical wavelength multiplex system in accordance with the present invention;
Fig. 7 is a flowchart illustrating an optical redundant switching method in an embodiment 5 of the optical wavelength multiplex system in accordance with the present invention;
Fig. 8 is a flowchart illustrating an optical redundant switching method in an embodiment 6 of the optical wavelength multiplex system in accordance with the present invention;
Fig. 9 is a flowchart illustrating an optical redundant switching method in an embodiment 7 of the optical wavelength multiplex system in accordance with the present invention;
Fig. 10 is a block diagram showing a configuration of operating and standby optical terminal units in an embodiment 8 in accordance with the present invention;
Fig. 11 is a flowchart illustrating an optical redundant switching method in the embodiment 8 of the optical wavelength multiplex system in accordance with the present invention; and
Fig. 12 is a block diagram showing a conventional optical communications system.

### DETAILED DESCRIPTION OF THE PREFERRED EMBODIMENTS

The invention will now be described with reference to the accompanying drawings.

### EMBODIMENT 1

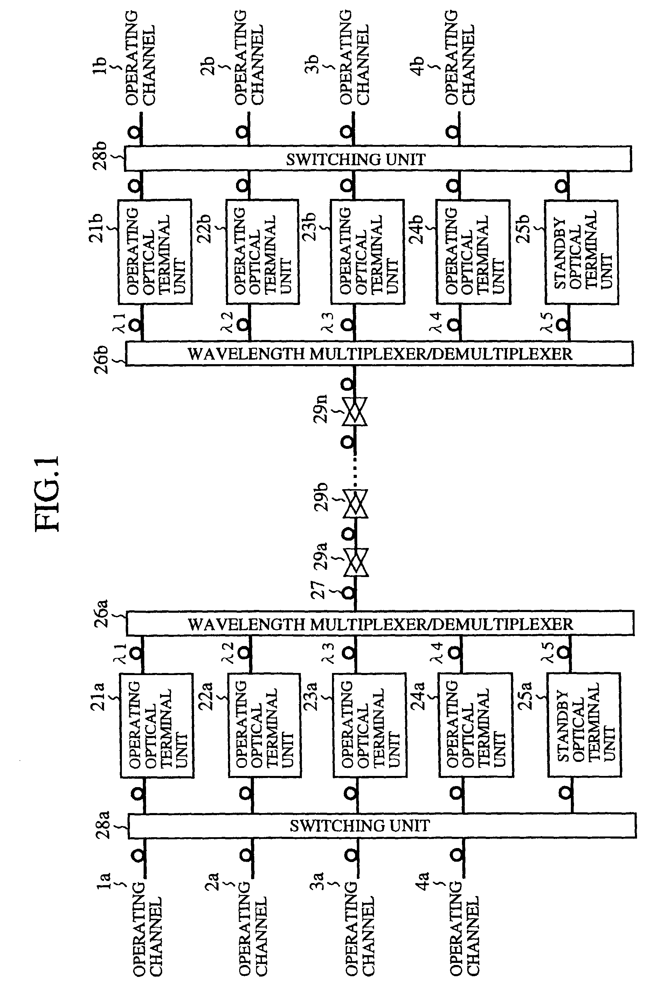

Fig. 1 is a block diagram showing an embodiment 1 of an optical wavelength multiplex system in accordance with the present invention. In this figure, reference numerals 1a-4a and 1b-4b designate four operating channels, respectively; 21a-24a and 21b-24b designate four operating optical terminal units for carrying out bidirectional conversion between wavelengths assigned to the operating channels 1a-4a and 1b-4b and prescribed different optical wavelengths λ1-λ4; and 25a and 25b each designate a standby optical terminal unit for carrying out bidirectional conversion between one of the wavelengths assigned to the operating channels and a prescribed optical wavelength λ5 different from the optical wavelengths λ1-λ4 assigned to the operating optical terminal units 21a-24a and 21b-24b.

Reference numerals 26a and 26b designate wavelength multiplexer/demultiplexers that are connected to the operating optical terminal units 21a-24a and standby optical terminal unit 25a and to the operating optical terminal units 21b-24b and standby optical terminal unit 25b, respectively, carry out wavelength multiplexing of optical signals with different wavelengths into a wavelength multiplexed optical signal to be transmitted to an optical transmission line 27, and carry out wavelength demultiplexing of a wavelength multiplexed optical signal fed from the optical transmission line 27 into optical signals with the different wavelengths. Reference numerals 28a and 28b designate switching units that connect the four operating channels 1a-4a and 1b-4b to the four operating optical terminal units 21a-24a and 21b-24b, respectively, and that connect by switching one of the four operating channels 1a-4a and 1b-4b to the standby optical terminal unit 25a and 25b, respectively, in case of failure of one of the operating systems. Reference numerals 29a-29n designate optical amplifying repeaters installed at fixed intervals on the optical transmission line 27 for amplifying an input wavelength multiplexed optical signal and output an amplified optical signal, each.

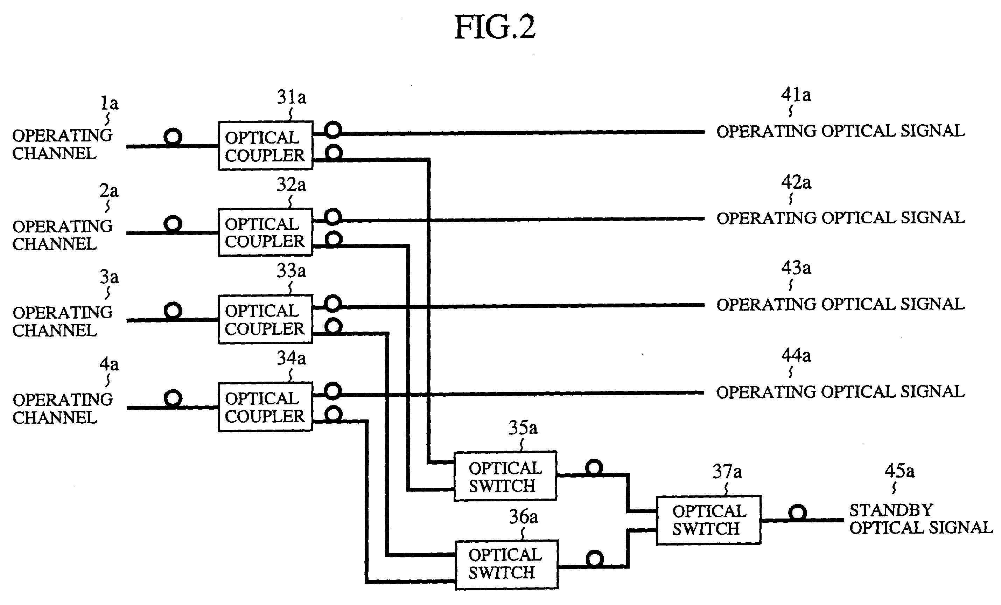

Fig. 2 is a block diagram showing the switching unit 28a or 28b in detail. In this figure, reference numerals 31a-34a designate optical couplers for splitting the optical signals supplied from the four operating channels 1a-4a to two directions, each; 35a-37a designate optical switches for selecting one of the four optical signals output from the operating channels 1a-4a, which are split by the optical couplers 31a-34a; 41a-44a designate operating optical signals output from the optical couplers 31a-344; and 45a designates a standby optical signal selected by the optical switches 35a-37a.

Next, the operation of the present embodiment 1 will be described.

For the sake of simplicity, let us describe only the transmission from the operating channels 1a-4a to the operating channels 1b-4b. The description of the reverse direction transmission from the operating channels 1b-4b to the operating channels 1a-4a will be omitted here because the same description is applicable by replacing the suffixes a with b.

The switching unit 28a connects the operating channels 1a-4a to the operating optical terminal units 21a-24a, respectively, and connects if necessary one of the operating channels 1a-4a to the standby optical terminal unit 25a by selecting the standby optical signal 45a by the optical switches 35a-37 as shown in Fig. 2. Incidentally, when the levels of the optical signals are reduced because of the optical couplers 31a-34a and optical switches 35a-37a, and hence the matching cannot be established with the optical signal levels of the connection destinations, their level reductions can be compensated for by interposing optical amplifiers in appropriate places.

The operating optical terminal unit 21a converts the wavelength of the operating optical signal 41a supplied through the switching unit 28a to λ1, and connects the optical signal with the wavelength of λ1 to the wavelength multiplexer/demultiplexer 26a. Likewise, the operating optical terminal units 22a-24a convert the wavelengths of the operating optical signals 42a-44a to λ2-λ4, and supply the optical signals with the wavelengths of λ2-λ4 to the wavelength multiplexer/demultiplexer 26a. The standby optical terminal unit 25a converts the wavelength of the standby optical signal 45a fed from the switching unit 28a to λ5, and supplies the optical signal with the wavelength of λ5 to the wavelength multiplexer/demultiplexer 26a.

The wavelength multiplexer/demultiplexer 26a carries out wavelength multiplexing of the wavelengths λ1-λ5, and supplies the wavelength multiplexed optical signal to the optical transmission line 27. The multiplexed signal is amplified by the optical amplifying repeaters 29a-29b installed at fixed intervals on the optical transmission line 27. In the same manner, on the opposite side, the wavelength multiplexer/demultiplexer 26b, which is connected with the optical transmission line 27, demultiplexes the wavelengths λ1-λ5, and supplies them to the operating optical terminal units 21b-24b and to the standby optical terminal unit 25b. The operating optical terminal unit 21b inversely converts the optical signal with the wavelength of λ1 to the operating optical signal, and supplies it to the switching unit 28b. Likewise, the operating optical terminal units 22b-24b inversely convert the optical signals with the wavelength of λ2-λ4 to the operating optical signals, and supply them to the switching unit 28b. The standby optical terminal unit 25b inversely converts the optical signal with the wavelength of λ5 to the standby optical signal, and supply it to the switching unit 28b.

The operating optical terminal units 21b-24b and the standby optical terminal unit 25b each have a frame alignment function and a transmission line monitoring function such as bit error detection, in order to check the validity of the transmission paths from the operating optical terminal units 21a-24a and standby optical terminal unit 25a to the operating optical terminal units 21b-24b and standby optical terminal unit 25b.

Once the validity of the transmission paths has been confirmed, the switching unit 28b outputs the operating optical signals from the operating optical terminal units 21b-24b to the operating channels 1b-4b, and discards the standby optical signal from the standby optical terminal unit 25b.

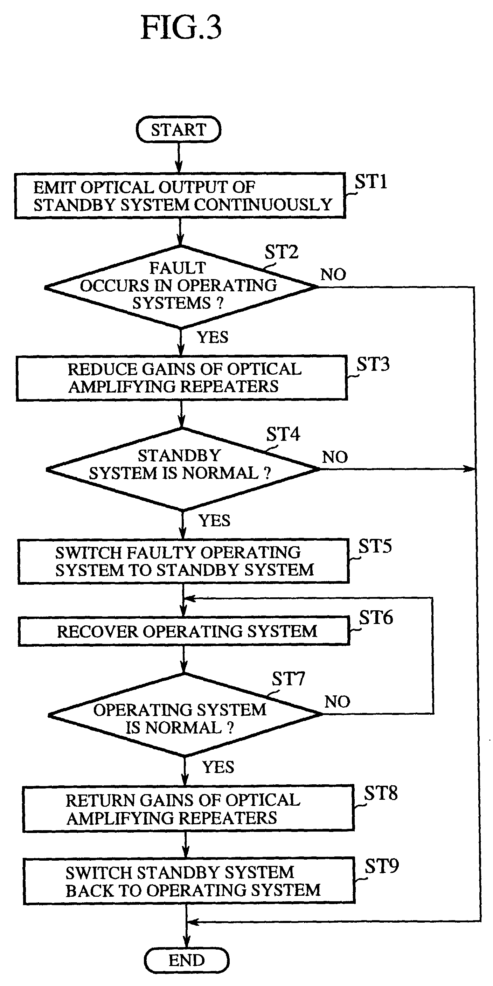

Fig. 3 is a flowchart illustrating in detail an optical redundant switching method in the embodiment 1 of the optical wavelength multiplex system in accordance with the present invention. In the normal operation mode of the operating systems in the present embodiment 1, the validity of the standby system is always checked by continuously emitting the optical signal with the wavelength λ5 of the standby system, and in a fault mode of the operating system, the gains of the optical amplifying repeaters 29a-29n are reduced while the operating channel of the faulty operating system is connected to the standby optical terminal units 25a and 25b.

In the normal operation mode of the operating systems, all the optical outputs with the wavelengths λ1-λ5 are emitted (step ST1) to be transmitted to the optical transmission paths connected to the operating optical terminal units 21a-24a and standby optical terminal unit 25a. In other words, the data to be transferred at respective wavelengths are normally communicated between the optical terminal units. Specifically, the operating channels 1a-4a are connected to the corresponding operating channels 1b-4b through the switching unit 28a, operating optical terminal units 21a-24a, wavelength multiplexer/demultiplexer 26a, optical transmission line 27, optical amplifying repeaters 29a-29n, wavelength multiplexer/demultiplexer 26b, operating optical terminal units 21b-24b and switching unit 28b.

The operating optical terminal units 21a-24a and 21b-24b, and the standby optical terminal units 25a and 25b each comprise a frame alignment function and a transmission line monitoring function such as bit error detection so that the validity of the optical transmission line 27 and the individual devices is checked continuously.

For example, if an error occurs in the communication between the operating channels 1a and 1b because of a fault taking place in the optical transmission line 27 or in the operating optical terminal unit 21a or 21b (step ST2), the gains of the optical amplifying repeaters 29a-29n are reduced (step ST3). Then, when the standby system is normal (step ST4), the switching units 28a and 28b connect the operating channels 1a and 1b to the standby optical terminal units 25a and 25b to save from the fault (step ST5).

In the optical redundant switching method in the present embodiment 1, the gains of the optical amplifying repeaters 29a-29n are reduced to maintain the transmission characteristics of the wavelength λ2-λ5 at the normal state, because of the following reason.

The channel design of the optical wavelength multiplex system is optimized for the number of waves continuously emitted in the normal mode, that is, the total number of waves of the operating and standby systems. In addition, the gains of the optical amplifying repeaters 29a-29n applied to the multi-repeater optical wavelength multiplex system are controlled such that their output levels are kept constant to reduce the variations in the gains for respective wavelengths and the variations in the gains of the individual optical amplifying repeaters. Accordingly, if the level of the optical wavelength λ1 is reduced or eliminated because of the fault, the remaining outputs of the optical amplifying repeaters 29a-29n associated with the wavelengths λ2-λ5 are amplified excessively, and the channel characteristics of the wavelengths λ2-λ5 can deviates from the initially intended channel design. This will degrade the channel characteristics, and cannot maintain the normal communication condition.

As to the operating system in the fault, its recovery is made by replacing a board in the optical terminal unit or replacing an optical fiber connecting the units (step ST6). When the validity of the operating system is confirmed, the gains of the optical amplifying repeaters 29a-29n are returned to the original design values (step ST8), and the switching units 28a and 28b reconnect the operating channels 1a and 1b, which are connected to the standby optical terminal units 25a and 25b, to the operating optical terminal units 21a and 21b (step ST9).

As described above, in the present embodiment 1, the optical output of the standby wavelength is emitted uninterruptedly, and the gains of the optical amplifying repeaters 29a-29n are reduced in the event of a fault of the operating system. This offers an advantage of being able to check the validity of the standby system on every occasion, and to suppress the adverse effect on the transmission characteristics of the reduction in the number of the emitted wavelengths.

### EMBODIMENT 2

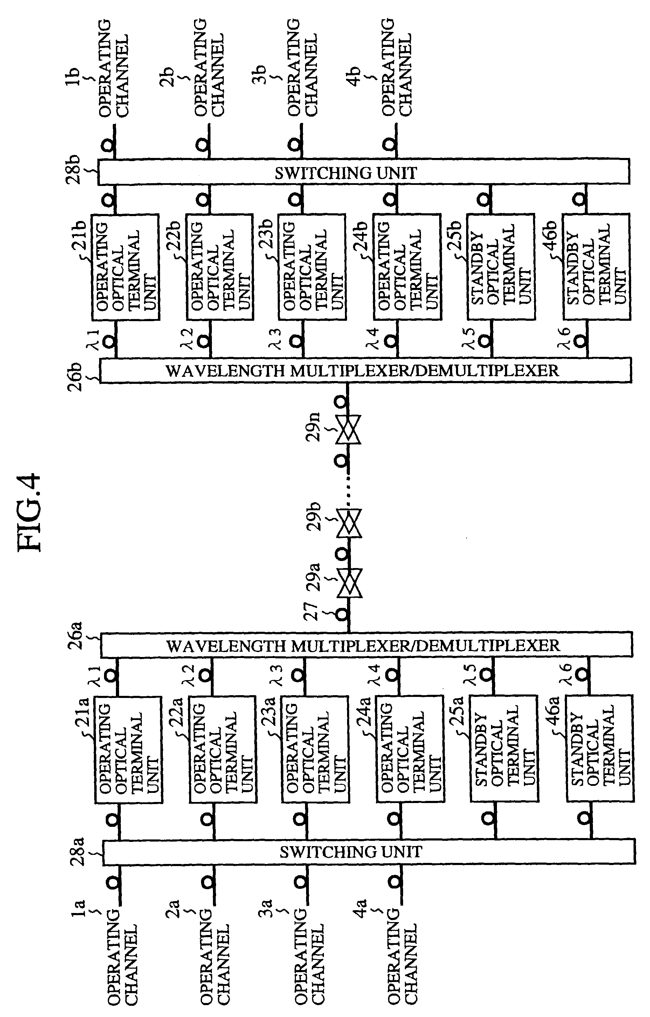

Fig. 4 is a block diagram showing an embodiment 2 of the optical wavelength multiplex system in accordance with the present invention. In this figure, reference numerals 46a and 46b designate additional standby optical terminal units for carrying out bidirectional conversion between optical signals transferred from the switching units 28a and 28b and optical signals with a wavelength of λ6 different from the wavelengths λ1-λ5. Thus, together with the standby optical terminal units 25a and 25b, two standby systems are provided in the present embodiment 2.

Although the remaining configuration is the same as that of Fig. 1, as for the switching units 28a and 28b of the present embodiment 2, using two switching units as shown in Fig. 2 makes it possible to select any two of the four operating channels 1a-4a to be connected to the two sets of standby optical terminal units 25a and 25b and 46a and 46b.

Next, the operation of the present embodiment 2 will be described.

Although only one optical wavelength is assigned to the standby system in the foregoing embodiment 1, two optical wavelengths are assigned to the standby systems of the present embodiment 2.

In the flowchart as shown in Fig. 3, the optical outputs of the two standby systems are always emitted, and the validity of the two standby systems are continuously checked in the normal mode of the operating systems. In the event of a fault of one of the operating systems, the gains of the optical amplifying repeaters 29a-29n are reduced, and the faulty operating channel is connected to the higher priority standby optical terminal units 25a and 25b, for example, when their validity is confirmed. If another fault takes place in another one of the operating systems, the gains of the optical amplifying repeaters 29a-29n are further reduced, and the faulty operating channel is connected to the lower priority standby optical terminal units 46a and 46b, when their validity is confirmed. As the faulty operating systems are recovered one by one, the gains are increased.

As described above, the present embodiment 2 comprises two standby systems. This offers an advantage of being able to further improve the reliability of the optical wavelength multiplex system.

Although the description of the present embodiment 2 is made assuming that N (N = 4) operating systems and M (M = 2) standby systems are installed, any number of operating systems and standby systems is permitted, with further improving the reliability as the number of the standby systems increases.

### EMBODIMENT 3

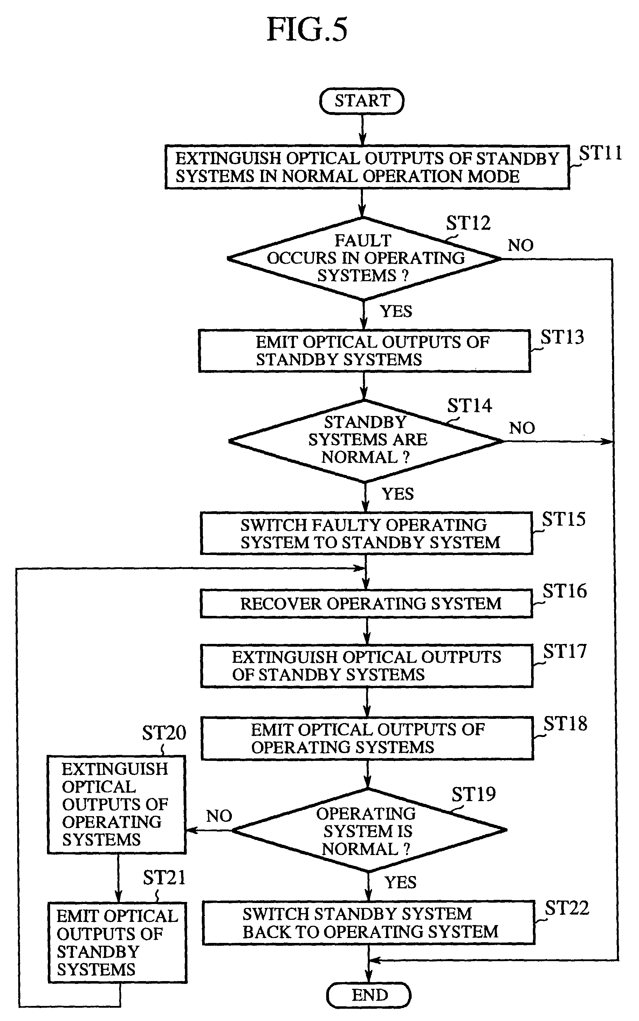

Fig. 5 is a flowchart illustrating an optical redundant switching method in an embodiment 3 of the optical wavelength multiplex system in accordance with the present invention. In the present embodiment 3, in the normal operation mode of the operation systems, the optical output with the standby wavelength is extinguished. If a fault takes place in one of the operating systems, the validity of the standby system is checked by emitting the optical output with the standby wavelength, and then the operating channel of the faulty operating system is switched to the standby optical terminal unit. When the faulty operating system is recovered, and the validity of the operating system is confirmed by emitting the optical output of the operating system, the optical output of the standby system is extinguished, and the switching to the recovered operating system is carried out.

Next, the operation of the present embodiment 3 will be described.

The optical output of the standby wavelength is extinguished (step ST11) in the normal operation mode of the operating systems. If a fault takes place in any one of the operating systems (step ST12), the optical output of the standby wavelength is emitted (step ST13). The validity of the standby system is checked (step ST14), and the operating channel connected with the faulty operating system is switched to the standby optical terminal units 25a and 25b by the switching units 28a and 28b (step ST15). Subsequently, the faulty operating system is recovered (step ST16). After completing the recovery of the operating system, the optical output of the standby system is extinguished (step ST17). At the same time, the optical output of the recovered operating system is emitted (step ST18) to check its validity (step ST19) . If the check result indicates an error, the optical output of the operating system is extinguished again (step ST20), and the optical output of the standby system is emitted again (step ST21) to carry out the recovery job (step ST16). When the faulty operation system becomes complete, the operating channel connected to the standby system is switched back to the original operating system (step ST22).

As described above, in the present embodiment 3, the number of the emitted waves is maintained at a fixed value. This offers an advantage of being able to prevent an adverse effect on the transmission characteristics.

Although the description of the present embodiment 3 is made assuming that N (N = 4) operating systems and M (M = 1) standby system are installed, the number of the operating systems may be greater than four, and two or more standby systems with priorities assigned can be installed as shown in Fig. 4, which can further improve the reliability of the entire system.

### EMBODIMENT 4

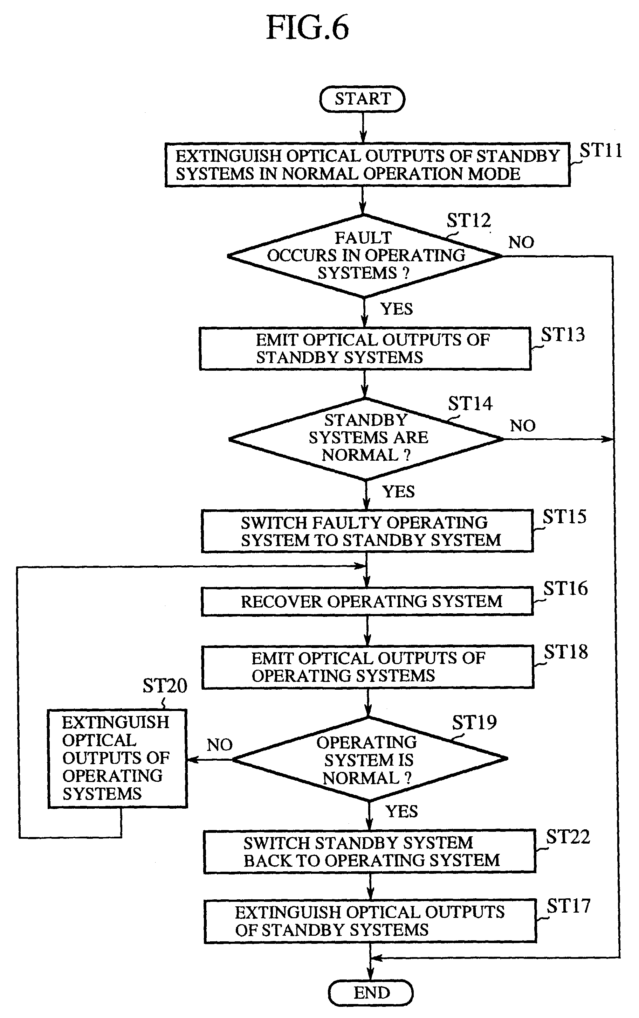

Fig. 6 is a flowchart illustrating an optical redundant switching method in an embodiment 4 of the optical wavelength multiplex system in accordance with the present invention. In the recovery process of the faulty operation system in the foregoing present embodiment 3, the extinction of the optical output of the standby system (step ST17 of Fig. 5) precedes the validity check of the operating system (step ST19 of Fig. 5), which is carried out by emitting the optical output of the operating system, and the switching back to the operating system (step ST22 of Fig. 5). In contrast with this, in the recovery process of the faulty operation system in the present embodiment 4, the extinction of the optical output of the standby system is subsequent to the validity check of the operating system, which is carried out by emitting the optical output of the operating system, and to the switching back to the operating system

Next, the operation of the present embodiment 4 will be described.

The steps up to the recovery of the operating system (step ST16) are the same as those of the foregoing embodiment 3. After completing the recovery, the optical output of the operating system is emitted (step ST18), and its validity check is conducted (step ST19). If an error occurs, the optical output of the operating system is extinguished again (step ST20), and the recovery job is carried out again (step ST16). On the other hand, when the validity check is completed normally, the operating channel which is connected to the standby system is switched back to the operating system (step ST22), and the optical output of the standby system is extinguished (step ST17).

As described above, in the present embodiment 4, the emitting state of all the wavelengths of the operating and standby systems occurs only during a short interval while checking the validity of the operating system after completing the recovery. This offers an advantage of being able to minimize the adverse effect on the transmission characteristics of the change in the number of waves optimized at the time of the channel design.

Although the description of the present embodiment 4 is made assuming that N (N = 4) operating systems and M (M = 1) standby system are installed, the number of the operating systems may be greater than four, and two or more standby systems with priorities assigned can be installed as shown in Fig. 4, which can further improve the reliability of the entire system.

### EMBODIMENT 5

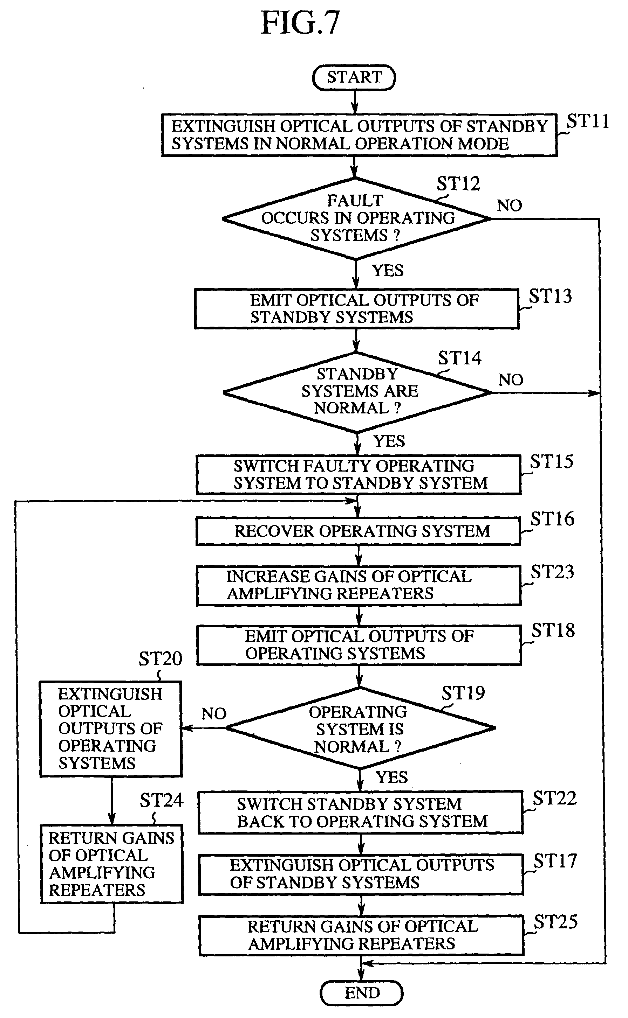

Fig. 7 is a flowchart illustrating an optical redundant switching method in an embodiment 5 of the optical wavelength multiplex system in accordance with the present invention. In the present embodiment 5, the gains of the optical amplifying repeaters 29a-29n are increased when emitting the optical output of the operating system in the recovery process of the operating system.

Next, the operation of the present embodiment 5 will be described.

Fig. 7 is a flowchart adding to the flowchart of Fig. 6 the following processings after completing the recovery. First, a step of increasing the gains of the optical amplifying repeaters 29a-29n (step ST23) when checking the validity of the operating system by emitting the optical output of the operating system; and second, a step of returning the gains of the optical amplifying repeaters 29a-29n after extinguishing the optical output of the standby system (steps ST24 and ST25).

As described above, the present embodiment 5 offers an advantage of being able to further reduce the adverse effect of the increase in the number of the simultaneously emitting optical waves on the transmission characteristics.

Although the description of the present embodiment 5 is made assuming that N (N = 4) operating systems and M (M = 1) standby system are installed, the number of the operating systems may be greater than four, and two or more standby systems with priorities assigned can be installed as shown in Fig. 4, which can further improve the reliability of the entire system.

### EMBODIMENT 6

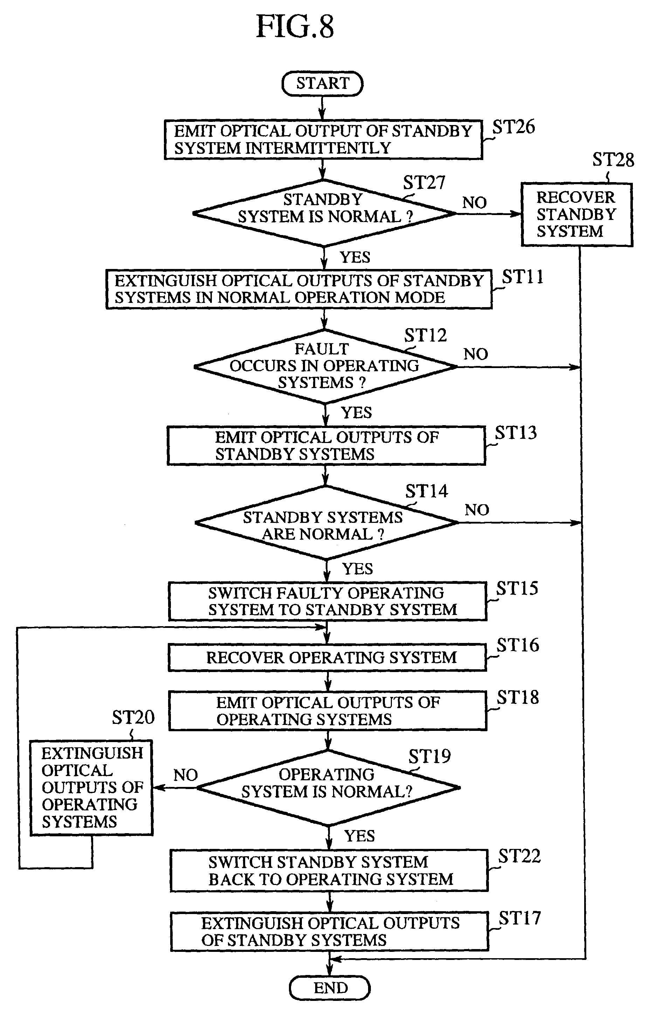

Fig. 8 is a flowchart illustrating an optical redundant switching method in an embodiment 6 of the optical wavelength multiplex system in accordance with the present invention. In the present embodiment 6, the validity check of the standby system is carried out by intermittently emitting the optical output of the standby system in the normal operation mode of the operating systems.

Next, the operation of the present embodiment 6 will be described.

Fig. 8 is a flowchart adding the following processings to the flowchart of Fig. 6. First, a step of intermittently emitting the optical output of the standby system in the normal operating state (step ST26); second, a step of checking the validity (step ST27) of the standby system; and third, a step of recovering the standby system if it is faulty (step ST28).

As described above, the present embodiment 6 offers an advantage of being able to further improve the reliability of the optical wavelength multiplex system because the validity check of the standby system can be carried out even in the normal operation mode.

Although the description of the present embodiment 6 is made assuming that N (N = 4) operating systems and M (M = 1) standby system are installed, the number of the operating systems may be greater than four, and two or more standby systems with priorities assigned can be installed as shown in Fig. 4, which can further improve the reliability of the entire system.

Although the steps of intermittently emitting the optical output of the standby system in the normal operation mode of the operating system, and checking the validity of the standby system are added to the flowchart of Fig. 6 in the present embodiment 6, these steps can be added to the flowchart of Fig. 5 of the embodiment 3, achieving the same effect.

### EMBODIMENT 7

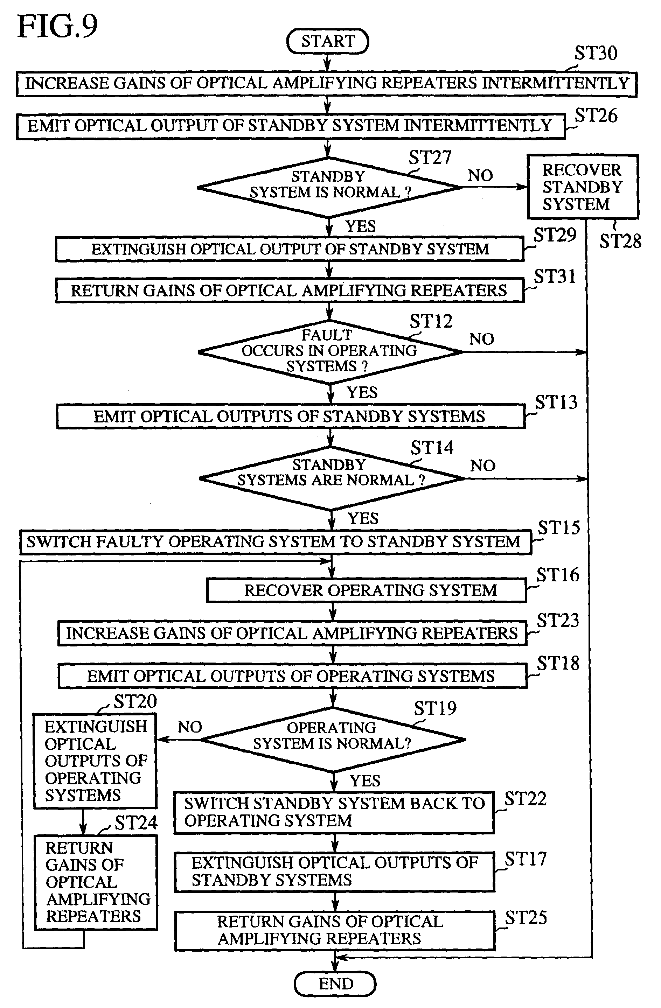

Fig. 9 is a flowchart illustrating an optical redundant switching method in an embodiment 7 of the optical wavelength multiplex system in accordance with the present invention. In the present embodiment 7, the gains of the optical amplifying repeaters 29a-29n are increased when intermittently emitting the optical output of the standby system in the normal operation mode of the operating systems.

Next, the operation of the present embodiment 7 will be described.

Fig. 9 is a flowchart that adds the following steps to the flowchart of Fig. 8: a step of intermittently increasing the gains of the optical amplifying repeaters 29a-29n (step ST30); and a step of returning the gains of the optical amplifying repeaters 29a-29n (step ST31) after extinguishing the optical output of the standby system.

As described above, the present embodiment 7 offers an advantage of being able to further improve the reliability of the optical wavelength multiplex system because the adverse effect on the transmission characteristics involved in checking the validity of the standby system can be further reduced.

Although the description of the present embodiment 7 is made assuming that N (N = 4) operating systems and M (M = 1) standby system are installed, the number of the operating systems may be greater than four, and two or more standby systems with priorities assigned can be installed as shown in Fig. 4, which can further improve the reliability of the entire system.

### EMBODIMENT 8

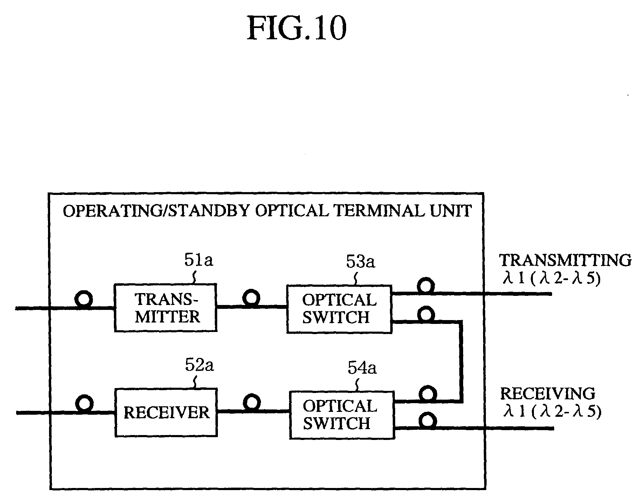

Fig. 10 is a block diagram showing a configuration of the operating or standby optical terminal unit in an embodiment 8 in accordance with the present invention. In this figure, the reference numeral 51a designates a transmitter for converting an operating channel wavelength to the optical wavelength λ1 (or λ2-λ5); 52a designates a receiver having a frame alignment function of the received signal with the optical wavelength λ1 (or λ2-λ5) and having a transmission line monitoring function such as bit error detection; and 53a and 54a each designate an optical switch.

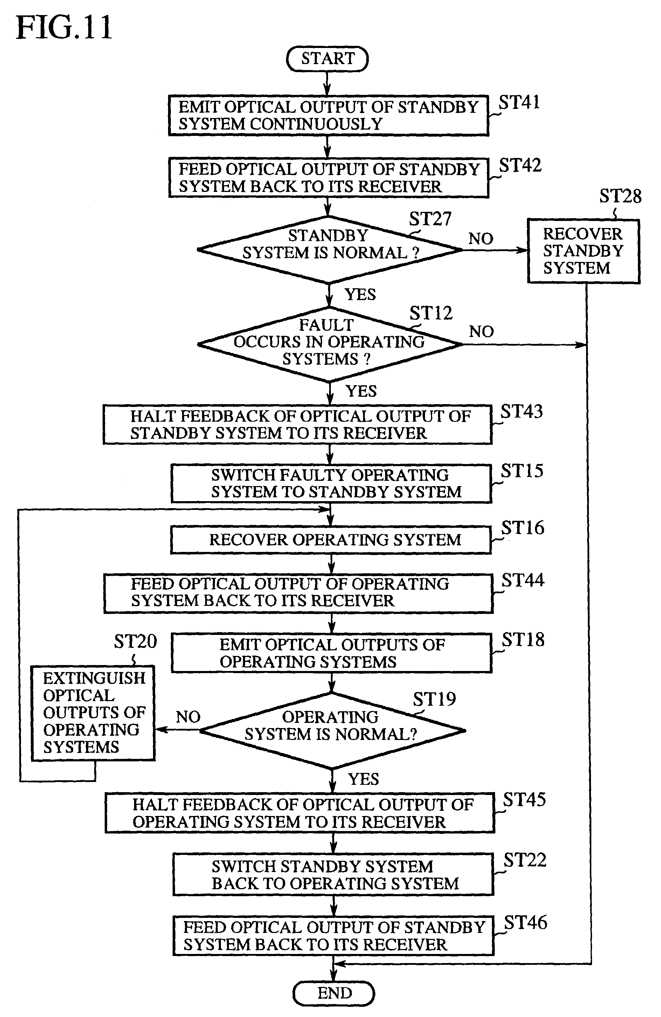

Fig. 11 is a flowchart illustrating an optical redundant switching method in the embodiment 8 of the optical wavelength multiplex system in accordance with the present invention. In the present embodiment 8, in the normal operation mode of the operating systems, the validity check of the standby system is carried out by feeding the optical output from the transmitter of the standby system back to the receiver of the standby system, and in the recovery mode of the operating system, the validity check of the operating system is carried out by feeding the optical output from the transmitter of the operating system back to the receiver of the operating system.

Next, the operation of the present embodiment 8 will be described.

In the normal operation mode of the operating system, the optical output of the standby system is continuously emitted (step ST41). In the standby optical terminal unit, the optical output from the transmitter is fed back to the receiver (step ST42) to check the validity of the standby system (step ST27), and if an error takes place, the recovery of the standby system is carried out (step ST28).

More specifically, in the standby optical terminal unit as shown in Fig. 10, the receiver 52a checks the validity of the standby optical terminal unit by receiving the optical output from the transmitter 51a via the optical switches 53a and 54a.

Thus, in the normal operation mode of the operating systems, the validity of the standby system can be confirmed without transmitting the optical output from the standby system to the optical transmission line 27. This makes it possible to prevent the adverse effect on the transmission characteristics.

If a fault takes place in the operating system (step ST12), the feedback of the optical output to the receiver in the standby system is halted (step ST43), and the faulty operating system is switched to the standby system (step ST15). This is carried out by switching the optical switches 53a and 54a to the transmitter side and receiver side, respectively.

Subsequently, the recovery of the operating system is carried out (step ST16); the optical output of the operating system is fed back to its receiver (step ST44); the optical output of the operating system is emitted (step ST18); and the validity of the operating system is checked (step ST19).

More specifically, in the operating optical terminal unit as shown in Fig. 10, the validity of the operating system is carried out by the receiver 52a that receives the output optical signal from the transmitter 51a via the optical switches 53a and 54a.

Thus, the validity of the operating system can be confirmed without transmitting the optical output from the operating system to the optical transmission line 27. This makes it possible to prevent the adverse effect on the transmission characteristics.

If the operating system is faulty, its optical output is extinguished (step ST20), and the recovery of the operating system is carried out (step ST16). If the operating system is normal, the feedback of its optical output to its receiver is halted (step ST45), the standby system is switched back to the operating system (step ST22), and the optical output from the standby system is fed back to the receiver (step ST46).

As described above, the present embodiment 8 can implement the validity check of the switching destination without producing any adverse effect on the transmission characteristics because the total number of the simultaneously emitted wavelengths is maintained at a fixed value on the optical transmission line 27.

Although the description of the present embodiment 8 is made assuming that N (N = 4) operating systems and M (M = 1) standby system are installed, the number of the operating systems may be greater than four, and two or more standby systems with priorities assigned can be installed as shown in Fig. 4, which can further improve the reliability of the entire system.

## Claims

1. An optical redundant switching method in an optical wavelength multiplex system that includes N operating optical terminal units (21a-25a) for carry out bidirectional conversion between operating channel wavelengths and prescribed different wavelengths (λ1-λ4), where N is a natural number; M standby optical terminal units (25a, 46a) for carry out bidirectional conversion between standby channel wavelengths and prescribed different wavelengths (λ5, λ6), where M is a natural number less than or equal to N; a wavelength multiplexer/demultiplexer (26a) connected to the operating optical terminal units and the standby optical terminal units, for multiplexing (N+M) optical signals with the prescribed different wavelengths to be transmitted to an optical transmission line (27), and for demultiplexing an optical wavelength multiplexed signal from the optical transmission line to (N+M) optical signals with the prescribed different wavelengths; a switching unit (28a) for connecting N operating channels to the N operating optical terminal units and for connecting M off the N operating terminal units to the M standby optical terminal units; and at least one optical amplifying repeater (29a-29n) installed in at least one position on the optical transmission line at a fixed interval, for amplifying an input optical wavelength multiplexed signal, said optical redundant switching method comprising the steps of:
carrying out validity check of the standby systems in a normal operation mode of the operating systems with emitting optical outputs of the standby systems continuously; and
reducing a gain of the optical amplifying repeater while at least one of the operating systems is faulty, and the operating channel associated with the faulty operating system is connected to one of the standby optical terminal units.

2. An optical redundant switching method in an optical wavelength multiplex system that includes N operating optical terminal units (21a-25a) for carry out bidirectional conversion between operating channel wavelengths and prescribed different wavelengths (λ1-λ4), where N is a natural number; M standby optical terminal units (25a, 46a) for carry out bidirectional conversion between standby channel wavelengths and prescribed different wavelengths (λ5, λ6), where M is a natural number less than or equal to N; a wavelength multiplexer/demultiplexer (26a) connected to the operating optical terminal units and the standby optical terminal units, for multiplexing (N+M) optical signals with the prescribed different wavelengths to be transmitted to an optical transmission line (27), and for demultiplexing an optical wavelength multiplexed signal from the optical transmission line to (N+M) optical signals with the prescribed different wavelengths; a switching unit (28a) for connecting N operating channels to the N operating optical terminal units and for connecting M of the N operating terminal units to the M standby optical terminal units; and at least one optical amplifying repeater (29a-29n) installed in at least one position on the optical transmission line at a fixed interval, for amplifying an input optical wavelength multiplexed signal, said optical redundant switching method comprising the steps of:
extinguishing optical outputs of the standby systems in a normal operation mode of the operating systems;
carrying out, if a fault takes place in the operating systems, validity check of the standby systems by emitting optical outputs of the standby systems; and
connecting the operating channel associated with a faulty operating system to one of the standby optical terminal units.

3. The optical redundant switching method in an optical wavelength multiplex system according to claim 2, further comprising the steps of:
extinguishing the optical outputs of the standby systems at a recovery of the faulty operating system; and
carrying out switching back to the recovered operating system.

4. The optical redundant switching method in an optical wavelength multiplex system according to claim 2, further comprising the steps of:
carrying out, at a recovery of the faulty operating system, switching back to the recovered operating system after confirming validity of the recovered operating system by emitting its optical output; and
extinguishing the optical outputs of the standby systems.

5. The optical redundant switching method in an optical wavelength multiplex system according to claim 4, further comprising the step of increasing the gain of the optical amplifying repeater when emitting the optical output of the recovered operating system.

6. The optical redundant switching method in an optical wavelength multiplex system according to claim 2, further comprising the step of carry out validity check of the standby systems by intermittently emitting the optical outputs of the standby systems in the normal operation mode of the operating systems.

7. The optical redundant switching method in an optical wavelength multiplex system according to claim 6, further comprising the step of increasing the gain of the optical amplifying repeater while intermittently emitting the optical outputs of the standby systems in the normal operation mode of the operating systems.

8. An optical redundant switching method in an optical wavelength multiplex system that includes N operating optical terminal units (21a-25a) for carry out bidirectional conversion between operating channel wavelengths and prescribed different wavelengths (λ1-λ4), where N is a natural number; M standby optical terminal units (25a, 46a) for carry out bidirectional conversion between standby channel wavelengths and prescribed different wavelengths (λ5, λ6), where M is a natural number less than or equal to N; a wavelength multiplexer/demultiplexer (26a) connected to the operating optical terminal units and the standby optical terminal units, for multiplexing (N+M) optical signals with the prescribed different wavelengths to be transmitted to an optical transmission line (27), and for demultiplexing an optical wavelength multiplexed signal from the optical transmission line to (N+M) optical signals with the prescribed different wavelengths; a switching unit (28a) for connecting N operating channels to the N operating optical terminal units and for connecting M of the N operating terminal units to the M standby optical terminal units; and at least one optical amplifying repeater (29a-29n) installed in at least one position on the optical transmission line at a fixed interval, for amplifying an input optical wavelength multiplexed signal, said optical redundant switching method comprising the steps of:
checking, in a normal operation mode of the operating systems, validity of the standby systems by feeding an optical output of a transmitter (51a) back to a receiver (52a) in each of the standby systems; and
checking, in a recovery mode of the operating systems, validity of the operating systems by feeding an optical output of a transmitter (51a) back to a receiver (52a) in each of the operating systems.
